# EUROPÄISCHE PATENTSCHRIFT

(11) **EP 3 990 991 B1**
(45) Veröffentlichungstag und Bekanntmachung des Hinweises auf die Patenterteilung: **19.08.2026**
(21) Anmeldenummer: 20732978.0
(22) Anmeldetag: 19.06.2020
(51) Int. Cl.: G05B 19/409

(54) **SYSTEM UND VERFAHREN ZUR STEUERUNG EINES KERNBOHRGERÄTS UND EINER AUTO-VORSCHUBVORRICHTUNG MIT EINEM HUMAN MACHINE INTERFACE, DAS AN DEM KERNBOHRGERÄT ANGEORDNET IST**
SYSTEM AND METHOD FOR CONTROLLING A CORE DRILLING MACHINE TOOL AND AN AUTO-FEED DEVICE WITH A HUMAN MACHINE INTERFACE WHICH IS ARRANGED ON THE MACHINE TOOL
SYSTÈME ET PROCÉDÉ DE COMMANDE D'UNE MACHINE-OUTIL ET D'UN DISPOSITIF D'AVANCE AUTOMATIQUE DOTÉ D'UNE INTERFACE HOMME-MACHINE DISPOSÉE SUR LA MACHINE-OUTIL

(30) Priorität: 27.06.2019 EP 19182858
(43) Veröffentlichungstag der Anmeldung: 04.05.2022
(73) Patentinhaber: Hilti Aktiengesellschaft, 9494 Schaan (LI)
(72) Erfinder: SCHAEFER, Martin, 6858 Schwarzach (AT); BALTER, Marco, 6800 Feldkirch (AT); METZLER, Christian, 6822 Satteins (AT)
(74) Vertreter: Hilti Aktiengesellschaft Corporate Intellectual Property
(86) Internationale Anmeldenummer: PCT/EP2020/067176
(87) Internationale Veröffentlichungsnummer: WO 2020/260156

(56) Entgegenhaltungen:
- EP-A1- 2 927 186
- DE-A1- 102011 082 988
- DE-A1- 102016 010 068

## Beschreibung

Die vorliegende Erfindung betrifft ein System, das ein Kernbohrgerät und eine automatische Vorschubvorrichtung umfasst, wobei das Kernbohrgerät ein *Human Machine Interface* (HMI) zur Steuerung des Kernbohrgeräts und der automatischen Vorschubeinrichtung aufweist. Das System ist unter anderem dadurch gekennzeichnet, dass eine Menüführung des HMI in Abhängigkeit von Betriebszuständen des Kernbohrgeräts und/oder der automatischen Vorschubvorrichtung automatisch steuerbar ist. In einem weiteren Aspekt betrifft die Erfindung die Verwendung eines HMI zur Steuerung eines Kernbohrgeräts und/oder einer Auto-Vorschubvorrichtung, wobei das Kernbohrgerät und die Auto-Vorschubvorrichtung, zusammen ein Arbeitssystem bilden.

### Hintergrund der Erfindung:

Im Bereich der Werkzeugmaschinen, insbesondere bei Kernbohrgeräten, die beispielsweise mit diamantbesetzten Bohrkronen ausgestattet sein können, ist es bekannt, die Werkzeugmaschinen in Verbindung mit einer automatischen Vorschubvorrichtung *(auto feed*) zu betreiben. Solche auch als Auto-Vorschubvorrichtungen bekannte Einrichtungen sind vorzugsweise dazu eingerichtet, die Werkzugmaschine selbsttätig in das zu bearbeitende Material hineinzutreiben, ohne dass dafür - wie früher - handbetriebene Vorrichtungen, wie beispielsweise Drehräder, eingesetzt werden müssen.

Um ein gewünschtes Arbeitsergebnis zu erzielen, müssen die automatische Vorschubeinrichtung und die Werkzeugmaschine aufeinander abgestimmt arbeiten bzw. gesteuert werden. Dazu müssen Eingaben und/oder Einstellungen an den Geräten vorgenommen werden, wobei solchen Eingaben bzw. Einstellungen zumeist unter Verwendung von Eingabemitteln in die Geräte eingegeben werden. Häufig werden jedoch die Eingabemittel insbesondere an den automatischen Vorschubvorrichtungen aus Kosten oder Gründen der einfachen Bedienbarkeit des Systems schlank gehalten. Es sind im Stand der Technik insbesondere solche Systeme aus Werkzeugmaschine und Auto-Vorschubvorrichtung bekannt, bei denen die Auto-Vorschubeinrichtung keine Anzeigenelemente umfasst. Manchmal weisen solche Auto-Vorschubvorrichtungen lediglich eine Not-Aus-Taste als Minimallösung für eine Mensch-Maschine-Kommunikation auf. Um eine solche minimalistische, automatische Vorschubvorrichtung dennoch bedarfsgerecht steuern zu können, wurde im Stand der Technik vorgeschlagen, die Auto-Vorschubvorrichtung über das *Human Machine Interface* (HMI) der Werkzeugmaschine mitzusteuern. Mit anderen Worten ist es im Stand der Technik bekannt, dass das HMI der Werkzeugmaschine zur Steuerung von sowohl der Werkzeugmaschine, als auch der Auto-Vorschubvorrichtung genutzt wird.

Ein HMI im Sinne der Erfindung kann beispielsweise ein Display, Anzeigenelemente, Bedienelemente oder andere Eingabe- und/oder Ausgabemittel umfassen, mit denen Vorrichtungen von einem Menschen gesteuert werden können bzw. mit denen Informationen, die das Gerät betreffen, dem Bediener angezeigt werden können. Insbesondere beschreibt der Begriff HMI im Sinne der Erfindung diejenigen Mittel an einer Vorrichtung, die die Kommunikation zwischen Mensch und Maschine ermöglichen oder unterstützen.

Bei konventionellen Systemen aus Werkzeugmaschinen und Auto-Vorschubvorrichtungen ist es teilweise üblich, dass die Auto-Vorschubvorrichtungen auch über das HMI der Werkzeugmaschine gesteuert werden. Dies führt zu verschiedenen Schwierigkeiten oder technischen Herausforderungen. Obwohl sowohl die Werkzeugmaschine, als auch die Auto-Vorschubvorrichtung im selben System arbeiten, ist es wünschenswert, dass die Betriebszustände von beiden Systembestandteilen möglichst gleichzeitig angezeigt werden können. Dies ist offensichtlich bei nur einem vorhandenen Display schwer möglich oder die Anzeige muss sehr klein gehalten werden und ist daher für einen Bediener schwer lesbar. Darüber hinaus müssen sowohl die Werkzeugmaschine, als auch die Auto-Vorschubeinrichtung mit denselben Bedienelementen - nämlich den Bedienelemente des HMI der Werkzeugmaschine - bedient werden. Hier kann es leicht zu fehlerhaften Eingaben kommen, die zu fehlerhaften und ggf. nicht reversiblen unerwünschten Arbeitsergebnissen führen können. Es ergibt sich, dass sowohl die Anzeige, als auch die Eingabe von Daten mit Schwierigkeiten verbunden sein kann, wenn als Steuerungsmittel für sowohl die Werkzeugmaschine, als auch die Auto-Vorschubvorrichtung nur ein HMI - üblicherweise das HMI der Werkzeugmaschine - verwendet wird.

Zur Behebung dieses Zustands ist im Stand der Technik vorgeschlagen worden, dass der Bediener des Systems aus Werkzeugmaschine und Auto-Vorschubvorrichtung einen Betriebsmodus und damit das aktuell zu bedienende Gerät auswählt. Der Begriff "Betriebsmodus" bedeutet im Sinne der Erfindung bevorzugt, dass zu einem Zeitpunkt ti entweder die Werkzeugmaschine oder die Auto-Vorschubvorrichtung mit dem HMI der Werkzeugmaschine gesteuert wird. Es gibt demnach einen Werkzeugmaschinen-Betriebsmodus und einen Auto-Vorschubvorrichtungs-Betriebsmodus. Der Bediener kann somit am HMI auswählen, ob er gerade die Werkzeugmaschine oder die Auto-Vorschubvorrichtung bedienen und/oder steuern möchte. Er kann dazu auch die entsprechenden und für das jeweilige Gerät relevanten Zubehör-Elemente, wie zum Beispiel eine digitale Wasserwaage oder eine manuelle Anbohrstufenselektion, auswählen. Dies ist aber in der Regel mit einem manuellen Eingriff in das System und zumeist mit einem unerwünschten Effizienzverlust verbunden. Darüber hinaus setzt ein solcher Auswahlprozess ein erhebliches Fachwissen des Bedieners voraus, das unter Umständen nicht immer gewährleistet werden kann.

Die DE 10 2011 082 988 A1 offenbart eine Steuereinrichtung für eine Werkzeugmaschine, wobei die Steuereinrichtung ein Bedienpanel umfasst, das beispielsweise zur Anzeige einer Benutzerschnittstelle verwendet werden kann.

Die EP 2 927 186 A2 betrifft ein Verfahren und System zum Betrieb eines Flurförderzeugs, bei dem eine Steuereinrichtung beispielswese abhängig von einem Betriebszustand einen Barcode mit zugeordneten Informationen anzeigt, die mit einem zusätzlichen, externen Gerät ausgelesen werden können.

In der DE 10 2016 010 068 wird eine numerische Steuerung mit Menü offenbart, wobei ein maschinelles Lernmodell zum Bestimmen einer Menueelementanzeige-Reihenfolge in der Menueanzeige auf Basis der Zustandsdaten verwendet wird.

Die Aufgabe, die der vorliegenden Erfindung zugrunde liegt, besteht darin, die vorstehend beschriebenen Nachteile des Standes der Technik zu überwinden und ein System aus Werkzeugmaschine und Auto-Vorschubvorrichtung bereitzustellen, mit dem sowohl die Anzeige, als auch die Eingabe von Daten in das bzw. von dem System erleichtert werden kann. Insbesondere soll die bekannte Lösung, eine Auto-Vorschubvorrichtung über ein HMI der Werkzeugmaschine, mit dem die Auto-Vorschubvorrichtung zusammenarbeitet, mitzusteuern, in dem Sinne verbessert werden, dass für den Bediener eine möglichst einfach, selbsterklärende und ergonomische Funktionsweise der unterschiedlichen Betriebsmodi des Systems ermöglicht wird. Dadurch soll insbesondere eine besonders intuitive und leicht zu erlernende Steuerung innerhalb der unterschiedlichen Betriebsmodi des Systems bereitgestellt werden, wobei insbesondere eine Funktion des Systems im "normalen" Betrieb der Werkzeugmaschine ermöglicht werden soll, sowie im Zusammenspiel mit einer Auto-Vorschubvorrichtung.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System vorgesehen, das ein Kernbohrgerät und eine automatische Vorschubvorrichtung umfasst, wobei das Kernbohrgerät ein *Human Machine Interface* (HMI) zur Steuerung des Kernbohrgeräts und der automatischen Vorschubeinrichtung aufweist. Das System ist dadurch gekennzeichnet, dass eine Menüführung des HMI in Abhängigkeit von Betriebszuständen des Kernbohrgeräts und/oder der automatischen Vorschubvorrichtung automatisch steuerbar ist, indem die Menüführung des HMI Menüseiten umfasst und die Menüseiten in Abhängigkeit von Betriebszuständen des Kernbohrgeräts und/oder der automatischen Vorschubvorrichtung anzeigbar sind, so dass die Menüführung des HMI abhängig von den Betriebszuständen des Kernbohrgeräts und/oder der Auto-Vorschubvorrichtung automatisch steuerbar wird. Dies bedeutet im Sinne der Erfindung, dass die einzelnen Menüseiten oder Bestandteile einzelner Menüseiten in Abhängigkeit von Betriebszuständen der Werkzeugmaschine und/oder der automatischen Vorschubvorrichtung angezeigt werden können.

Das Kernbohrgerät wird in der Beschreibung der Erfindung vorzugweise auch als Werkzeugmaschine bezeichnet; gemeint ist damit jeweils das vorgeschlagene Kernbohrgerät. Die Auto-Vorschubvorrichtung ist vorzugsweise dazu eingerichtet, eine Cut Assist-Funktion bereitzustellen. Das bedeutet im Sinne der Erfindung, dass ein Werkzeug der Werkzeugmaschine mit Hilfe der Auto-Vorschubvorrichtung in eine zu bearbeitende Wand oder in einen zu bearbeitenden Untergrund hineingetrieben wird. Bei dem Werkzeug der Werkzeugmaschine kann es sich beispielsweise um eine Bohrkrone handeln. Häufig sind solche Bohrkronen mit Diamanten oder Diamantsplittern besetzt, um die Schneidleistung zu verbessern. Es ist in diesen Fällen bevorzugt, dass die Werkzeugmaschine ein Diamant-Kernbohrgerät ist. Die Erfindung besteht darin, dass die Menüführung des HMI des Kernbohrgeräts abhängig von den Betriebszuständen des Kernbohrgeräts und/oder der Auto-Vorschubvorrichtung gesteuert wird. Dadurch ist eine manuelle Selektion der Unterpunkte der Menüführung durch den Bediener vorteilhafterweise nicht mehr erforderlich.

Die Formulierung "Betriebszustand der Werkzeugmaschine" beschreibt im Sinne der Erfindung bevorzugt einen Zustand der Werkzeugmaschine während des Betriebs des vorgeschlagenen Systems. Dieser Zustand kann durch verschiedene Einstellungen und Gegebenheiten der Werkzeugmaschine gekennzeichnet sein. Beispielsweise kann der Zustand einer Werkzeugmaschine dadurch gekennzeichnet sein, dass die Werkzeugmaschine eingeschaltet ist oder dadurch, dass die Werkzeugmaschine mit einer Auto-Vorschubvorrichtung verbunden ist. Analog kann ein Zustand der automatischen Vorschubvorrichtung dadurch gekennzeichnet sein, dass ihr Not-Aus-Schalter freigeben ist oder dass eine Verbindung zur Werkzeugmaschine nicht besteht. Vorzugsweise wird ein Zustand durch eine Menge an verschiedenen Unter-Zuständen charakterisiert, wobei die Menge an Unter-Zuständen bevorzugt den Betriebszustand einer Systemkomponente oder des vorgeschlagenen Systems bildet. Es ist im Sinne der Erfindung insbesondere bevorzugt, dass die Betriebszustände von Einstellungen und/oder Unter-Zuständen der Werkzeugmaschine und/oder der automatischen Vorschubvorrichtung gebildet werden.

Die Formulierung, dass eine Menüführung "automatisch steuerbar" ist, bedeutet im Sinne der Erfindung bevorzugt, dass unterschiedliche Menüseiten oder Menüübersichten ohne manuelles Zutun eines menschlichen Bedieners angezeigt werden. Die automatische Steuerbarkeit der Menüführung des HMI der Werkzeugmaschine stellt einen wesentlichen Vorteil der Erfindung dar. Das System ist vorzugsweise in der Lage, den jeweiligen Betriebszustand der Systemkomponenten und/oder des vorgeschlagenen Systems zu erkennen und im Lichte des ermittelten Betriebszustands diejenigen Menüpunkte oder Menü-Unterseiten anzuzeigen, die zum aktuellen Betriebszeitpunkt relevant für den Bediener sind, um einen optimalen Betrieb des Systems bzw. seiner Komponenten zu gewährleisten. Es ist im Sinne der Erfindung bevorzugt, dass das System dazu eingerichtet ist, die Betriebszustände der Werkzeugmaschine und/oder der automatischen Vorschubvorrichtung zu erkennen und auszuwerten. Zur Ermittlung der aktuellen Betriebszustände kann das System bzw. seine Komponenten eine geeignete Sensorik und/oder einen Prozessor für die Auswertung und/oder Speicherung der erhobenen und/oder verarbeiteten Daten aufweisen.

Ferner kann das System über Kommunikationsmittel zwischen der Werkzeugmaschine und der Auto-Vorschubvorrichtung verfügen. Das System kann eine Kommunikationsverbindung umfassen, mit der eine Kommunikationsmöglichkeit zwischen der Werkzeugmaschine und der automatischen Vorschubvorrichtung bereitgestellt werden kann. Es ist im Sinne der Erfindung bevorzugt, dass das System eine Kommunikationsverbindung zur Kommunikation zwischen der Werkzeugmaschine und der automatischen Vorschubvorrichtung umfasst. Vorzugsweise ist die Kommunikationsverbindung des vorgeschlagenen Systems drahtlos, beispielsweise als *bluetooth-*Kommunikationsverbindung, ausgestaltet, wobei auch andere Kommunikationsarten im Kontext der vorliegenden Erfindung denkbar sind, zum Beispiel NFC, Funk oder andere insbesondere für kurze Distanzen geeignete Kommunikationsformen. Die Kommunikation kann beispielsweise auch drahtgebunden, also zum Beispiel unter Verwendung eines Kabels erfolgen. Es ist im Sinne der Erfindung bevorzugt, dass die Kommunikationsverbindung dazu eingerichtet ist, die für die Steuerung bzw. die Kommunikation zwischen Werkzeugmaschine und Auto-Vorschubvorrichtung erforderliche Datenraten und/oder Übertragungsgeschwindigkeit bereitzustellen.

Die Formulierung "in Abhängigkeit von den Betriebszuständen der Werkzeugmaschine und/oder der Auto-Vorschubvorrichtung" bedeutet im Sinne der Erfindung bevorzugt, dass das System dazu eingerichtet ist, zu erkennen, in welchem Betriebszustand die Werkzeugmaschine bzw. die Auto-Vorschubeinrichtung gerade arbeitet. Dem Bediener des Systems werden dann über das HMI der Werkzeugmaschine nur diejenigen Unterpunkte bzw. Unterseiten der Menüführung angezeigt, die in dem jeweiligen Betriebszustand des Systems gerade relevant sind. Eine Unterseite der Menüführung kann beispielsweise dadurch relevant sein, dass eine auf dieser Unterseite angezeigte Information für den Bediener oder für die Fortführung der Arbeit mit dem System notwendig ist. Eine Relevanz kann sich beispielsweise auch daraus ergeben, dass auf dem Display des HMI eine Funktion angezeigt wird, die in Verbindung mit ebenfalls zum HMI der Werkzeugmaschine gehörenden Bedien- oder Auswahlelementen ausgewählt werden kann, wobei diese Auswahl für die Fortführung der Arbeit mit dem System erforderlich ist.

Es ist im Sinne der Erfindung bevorzugt, dass die Auto-Vorschubvorrichtung in Zusammenhang mit der Werkzeugmaschine dazu eingerichtet ist, einen vollautomatischen Bohrprozess auszuführen, steuern und/oder zu bewirken. Insbesondere umfasst der vollautomatische Bohrprozess die Vorgänge des Anbohrens, Bohrens, Erkennens der Fertigstellung des Bohrloches und/oder die Rückkehr zur Ausgangsposition, ohne darauf beschränkt zu sein. Es ist im Sinne der Erfindung bevorzugt, dass eine Steuerung der Auto-Vorschubvorrichtung des vorgeschlagenen Systems in der Auto-Vorschubvorrichtung selbst erfolgt, wobei die Werkzeugmaschine vorzugsweise die dafür erforderlichen Informationen liefert. Es ist im Sinne der Erfinder ferner bevorzugt, dass mit der Werkzeugmaschine des Systems eine Anzeige- und Einstellmöglichkeit bereitgestellt wird, die für die Steuerung der Auto-Vorschubvorrichtung verwendet werden kann. Vorzugsweise werden diese Anzeige- und Einstellmöglichkeiten durch die Vorsehung des HMI an der Werkzeugmaschine bereitgestellt. Das HMI der Werkzeugmaschine des hier vorgeschlagenen Systems ist insbesondere dazu eingerichtet, komplexe Informationen besonders übersichtlich darzustellen. Dazu kann beispielsweise ein Matrix-Dot-Display verwendet werden. Mit einem solchen Display, das insbesondere zur Anzeige komplexer Informationen eingerichtet ist, können vorteilhafterweise nicht nur alphanummerische Anzeigezeilen, wie zum Beispiel Fehlercodes, angezeigt werden, sondern auch zweidimensionale Objekte, wie Diagramme, Koordinatensystem oder dergleichen. Durch die Möglichkeit, komplexe Informationen anzuzeigen, unterscheidet sich die vorliegende Erfindung insbesondere von sogenannten Segment-Displays, die zumeist auf die Anzeige von einzeiligen Buchstaben- und Zahlenkombinationen beschränkt sind, vergleichbar einem nicht-programmierfähigen Taschenrechner.

Die Erfindung soll im Folgenden durch Anwendungsbeispiele verdeutlicht werden. Wenn beispielsweise die Auto-Vorschubvorrichtung und die Werkzeugmaschine miteinander verbunden sind, ein Austausch von Daten zwischen den beiden Systembestandteilen möglich ist, eine Not-Aus-Taste der Auto-Vorschubvorrichtung freigegeben ist und ein An-Aus-Schalter der Werkzeugmaschine ausgeschaltet ist, können Anzeige- und Bedienelemente des HMI der Werkzeugmaschine zu einer Positionierung der Auto-Vorschubvorrichtung und/oder zur Ausrichtung des Bohrsystems der Werkzeugmaschine aktiviert werden. Dieser Betriebszustand des Systems wird im Sinne der Erfindung beispielsweise als *Cut Assist Positioning-Modus* bezeichnet. Die Positionierung der Auto-Vorschubvorrichtung betrifft dabei insbesondere eine Auf- und AbBewegung der Auto-Vorschubvorrichtung. Die Ausrichtung des Bohrsystems kann vorzugsweise unter Zuhilfenahme einer digitalen Wasserwage erfolgen, die Bestandteil des Systems, insbesondere der Werkzeugmaschine, sein kann. Wird nun in diesem *Cut Assist Positioning-Modus* der Ein-Aus-Schalter der Werkzeugmaschine betätigt, wechseln die Anzeige- und Bedienelemente des HMI der Werkzeugmaschine auf den sogenannten *Cut Assist Setting-Modus.* In dem *Cut Assist Setting-Modus* können die Anzeige- und Bedienelemente zur Einstellung, sowie zum Start des automatischen Bohrbetriebs aktiviert werden. Die Einstellung des automatischen Bohrbetriebs kann beispielsweise das Ein- und Ausschalten der Durchbruchserkennung oder eine Leistungsreduktions-Funktion der Auto-Vorschubvorrichtung beinhalten. Es ist im Sinne der Erfindung bevorzugt, dass die Anzeige- und Bedienelemente in den "normalen" Kernbohrbetrieb schalten bzw. wechseln, wenn der automatische Bohrbetrieb gestartet wird.

Es ist im Sinne der Erfindung bevorzugt, dass Komponenten des HMI der Werkzeugmaschine ausgewählt sind aus einer Gruppe, die folgende Komponenten umfassen kann: Display, Touch-Bildschirm, Bedienelemente, Tasten, Schalter, Ausgabemittel und/oder Anzeigenmittel, ohne darauf beschränkt zu sein. Insbesondere kann das System bzw. das HMI auch ein Dashboard bzw. eine Dashboard-Funktion umfassen. Beispielsweise kann das HMI dazu eingerichtet sein, unterschiedliche Funktionen auf dem Display anzuzeigen. Bei diesen Funktionen kann es sich beispielsweise um eine Ganganzeige, Fehler- und/oder Warnmeldungen, Angaben zum Status der Kommunikationsverbindung *(bluetooth* an oder aus) handeln, ohne darauf beschränkt zu sein. Insbesondere können mit dem HMI der Werkzeugmaschine der vorliegenden Erfindung mehrere verschiedene Informationen gleichzeitig angezeigt werden, da das Display vorteilhafterweise nicht auf eine einzeilige Anzeige beschränkt ist.

In einem zweiten Aspekt betrifft die Erfindung ein Verfahren zur Steuerung eines Kernbohrgeräts und einer Auto-Vorschubvorrichtung mit einem *Human Machine Interface* (HMI), das an dem Kernbohrgerät angeordnet ist, wobei das Verfahren durch die folgenden Schritte gekennzeichnet ist:
a) Bereitstellung eines Kernbohrgeräts mit einer HMI,
b) Bereitstellung einer automatischen Vorschubvorrichtung,
wobei eine Menüführung des HMI des Kembohrgeräts so eingerichtet ist, dass zu einem Zeitpunkt tBetrieb des Betriebs des Kernbohrgeräts oder der automatischen Vorschubvorrichtung über das HMI nur diejenigen Menüseiten der Menüführung anzeigt werden, die für den Betrieb des Kernbohrgeräts und/oder der automatischen Vorschubeinrichtung und/oder dessen Fortsetzung erforderlich sind. Es ist im Sinne der Erfindung insbesondere bevorzugt, dass die automatische Vorschubvorrichtung kein eigenes HMI umfasst, sondern das die Auto-Vorschubvorrichtung durch das HMI des Kernbohrgeräts mitgesteuert wird. Es ist im Kontext der vorliegenden Erfindung vorgesehen, dass eine Auswahl der Menüseiten der Menüführung in Abhängigkeit von Betriebszuständen der Werkzeugmaschine und/oder der automatischen Vorschubeinrichtung erfolgt. Insbesondere sind die Werkzeugmaschine und/oder die automatische Vorschubvorrichtung dazu eingerichtet, die Betriebszustände der Werkzeugmaschine und/oder der automatischen Vorschubvorrichtung zu erkennen und auszuwerten.

In einem weiteren Aspekt betrifft die Erfindung die Verwendung eines *Human Machine Interface* (HMI) zur Steuerung eines Kernbohrgeräts und einer Auto-Vorschubvorrichtung. Die Verwendung ist dadurch gekennzeichnet, dass das HMI an dem Kernbohrgerät angeordnet ist und eine Menüführung umfasst, wobei die Menüführung des HMI in Abhängigkeit von Betriebszuständen des Kernbohrgeräts und/oder der automatischen Vorschubvorrichtung automatisch steuerbar ist, indem die Menüführung des HMI Menüseiten umfasst und die Menüseiten in Abhängigkeit von Betriebszuständen des Kernbohrgeräts und/oder der automatischen Vorschubvorrichtung anzeigbar sind, so dass die Menüführung des HMI abhängig von den Betriebszuständen des Kernbohrgeräts und/oder der Auto-Vorschubvorrichtung automatisch steuerbar wird. Die Definitionen, technischen Wirkungen und überraschenden Vorteile, die für das vorgeschlagene System beschrieben wurden, gelten für das Verfahren und der Verwendung des HMI des Kernbohrgeräts analog.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:

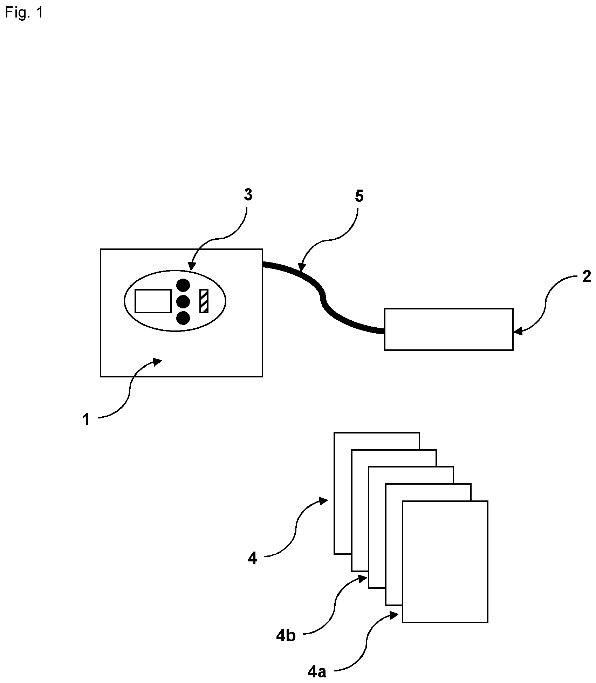

- Fig. 1: Ansicht einer bevorzugten Ausgestaltung der Erfindung

### Ausführungsbeispiele:

Figur 1 zeigt eine Ansicht einer bevorzugten Ausgestaltung der Erfindung. Insbesondere zeigt Figur 1 ein System, das eine Werkzeugmaschine (1) und eine automatische Vorschubvorrichtung (2) umfasst. Bei der Werkzeugmaschine (1) handelt es sich erfindungsgemäß um ein Kernbohrgerät. Die Werkzeugmaschine (1) weist ein *Human Machine Interface* (HMI) (3) auf, während die Auto-Vorschubvorrichtung (2) kein eigenes HMI (3) im Sinne der Erfindung aufweist. Allerdings kann die automatische Vorschubvorrichtung (2) einen Not-Aus-Schalter aufweisen, der im Sinne der Erfindung kein HMI darstellt. Das HMI (3) der Werkzeugmaschine (1) kann ein Display, Bedienelemente, Schalter und/oder Tasten umfassen, ohne darauf beschränkt zu sein. Es ist im Sinne der Erfindung bevorzugt, dass die Werkzeugmaschine (1) und die automatische Vorschubvorrichtung (2) über eine Kommunikationsverbindung (5) miteinander verbunden sind, so dass vorteilhafterweise eine Kommunikation und/oder ein Datenaustausch zwischen den Systembestandteilen (1, 2) stattfinden kann. Vorzugsweise kann die Kommunikationsverbindung (5) drahtlos ausgebildet sein, also beispielsweise als bluetooth-Kommunikationsver-bindung. Es sind jedoch im Kontext der vorliegenden Erfindung auch verschiedene andere drahtlose Kommunikationstypen bevorzugt.

Im rechten, unteren Bildbereich von Figur 1 ist eine schematische Abbildung einer Menüführung (4) dargestellt. Die Menüführung (4) umfasst mehrere Menü-Unterseiten (beispielhaft: 4a, 4b), die in Abhängigkeit von Betriebszuständen der Werkzeugmaschine (1) und/oder der automatischen Vorschubvorrichtung (2) einem Bediener des Systems über das HMI (3) der Werkzeugmaschine (1) angezeigt werden können. Der Bediener kann dann im Lichte der dargestellten Informationen beispielsweise Entscheidungen zum Betrieb des Systems treffen oder Einstellungen an der Werkzeugmaschine (1) und/oder an der Auto-Vorschubvorrichtung (2) vornehmen. Es kann im Sinne der Erfindung bevorzugt sein, dass dem Bediener eine einzige relevante Menü-Unterseite (4a, 4b) angezeigt wird. Es kann aber ebenso gut bevorzugt sein, dass dem Bediener des Systems eine Abfolge von Menü-Unterseiten (4a, 4b) der Menüführung (4) angezeigt werden. Die Anzeige und Auswahl der Menü-Unterseiten (4a, 4b) wird vorzugsweise von dem System zentral gesteuert, wobei diese Anzeige und Auswahl im Sinne der Erfindung bevorzugt als "automatische Steuerung" der Menüführung (4) bezeichnet wird. Insbesondere werden für die Auswahl der anzuzeigenden Menü-Unterseiten (4a, 4b) die Betriebszustände der Werkzeugmaschine (1) und der Auto-Vorschubvorrichtung (2) herangezogen.

### Bezugszeichenliste

- 1: Werkzeugmaschine, Kernbohrgerät
- 2: automatische Vorschubvorrichtung
- 3: *Human Machine Interface* (HMI)
- 4: Menüführung
- 5: Kommunikationsverbindung

## Patentansprüche

1. System, das ein Kernbohrgerät (1) und eine automatische Vorschubvorrichtung (2) umfasst, wobei das Kernbohrgerät ein *Human Machine Interface* (HMI) (3) zur Steuerung des Kernbohrgeräts (1) und der automatischen Vorschubeinrichtung (2) aufweist, wobei eine Menüführung (4) des HMI (3) in Abhängigkeit von Betriebszuständen des Kernbohrgeräts (1) und der automatischen Vorschubvorrichtung (2) automatisch steuerbar ist, indem die Menüführung des HMI Menüseiten umfasst und die Menüseiten in Abhängigkeit von Betriebszuständen des Kernbohrgeräts und der automatischen Vorschubvorrichtung anzeigbar sind, wobei das System dazu eingerichtet ist, die Betriebszustände des Kernbohrgeräts (1) und der automatischen Vorschubvorrichtung (2) zu erkennen und auszuwerten und wobei eine Auswahl der Menüseiten in Abhängigkeit von Betriebszuständen des Kernbohrgeräts (1) und der automatischen Vorschubeinrichtung (2) erfolgt.

2. System nach Anspruch 1
**dadurch gekennzeichnet, dass**
das System eine Kommunikationsverbindung (5) zur Kommunikation zwischen dem Kernbohrgerät (1) und der automatischen Vorschubvorrichtung (2) umfasst.

3. System nach Anspruch 2
**dadurch gekennzeichnet, dass**
die Kommunikationsverbindung (5) drahtlos ausgebildet ist.

4. System nach einer der vorhergehenden Ansprüche
**dadurch gekennzeichnet, dass**
die Betriebszustände von Einstellungen und/oder Unter-Zuständen des Kernbohrgeräts (1) und/oder der automatischen Vorschubvorrichtung (2) gebildet werden.

5. Verfahren zur Steuerung eines Kernbohrgeräts (1) und einer automatischen Vorschubvorrichtung (2) mit einem *Human Machine Interface* (HMI) (3), das an der Werkzeugmaschine (1) angeordnet ist,
wobei das Verfahren die folgenden Schritte umfasst:
a) Bereitstellung eines Kernbohrgeräts (1) mit einem HMI (3),
b) Bereitstellung einer automatischen Vorschubvorrichtung (2),
wobei eine Menüführung (4) des HMI (3) des Kernbohrgeräts (1) so eingerichtet ist, dass zu einem Zeitpunkt tBetrieb des Betriebs des Kernbohrgeräts (1) oder der automatischen Vorschubvorrichtung (2) über das HMI (3) nur diejenigen Menüseiten der Menüführung (4) anzeigt werden, die für den Betrieb und/oder eine Fortsetzung des Betriebs des Kernbohrgeräts (1) oder der automatischen Vorschubeinrichtung (2) erforderlich sind, wobei das System dazu eingerichtet ist, die Betriebszustände des Kernbohrgeräts (1) und der automatischen Vorschubvorrichtung (2) zu erkennen und auszuwerten und wobei eine Auswahl der Menüseiten in Abhängigkeit von Betriebszuständen des Kernbohrgeräts (1) und der automatischen Vorschubeinrichtung (2) erfolgt.

6. Verfahren nach Anspruch 5
**dadurch gekennzeichnet, dass**
das Kernbohrgerät (1) und/oder die automatische Vorschubvorrichtung (2) dazu eingerichtet ist, die Betriebszustände des Kernbohrgeräts (1) und/oder der automatischen Vorschubvorrichtung (2) zu erkennen und auszuwerten.

7. Verwendung eines *Human Machine Interface* (HMI) (3) zur Steuerung eines Kernbohrgeräts (1) und einer automatischen Vorschubvorrichtung (2) wobei das HMI (3) an dem Kernbohrgerät (1) angeordnet ist und eine Menüführung (4) umfasst, wobei die Menüführung (4) des HMI (3) in Abhängigkeit von Betriebszuständen des Kernbohrgeräts (1) und der automatischen Vorschubvorrichtung (2) automatisch steuerbar ist, indem die Menüführung (4) des HMI Menüseiten umfasst und die Menüseiten in Abhängigkeit von Betriebszuständen des Kernbohrgeräts (1) und der automatischen Vorschubvorrichtung anzeigbar sind, wobei das System dazu eingerichtet ist, die Betriebszustände des Kernbohrgeräts (1) und der automatischen Vorschubvorrichtung (2) zu erkennen und auszuwerten und wobei eine Auswahl der Menüseiten in Abhängigkeit von Betriebszuständen des Kernbohrgeräts (1) und der automatischen Vorschubeinrichtung (2) erfolgt.

## Claims

1. System comprising a core drill (1) and an automatic feed device (2), the core drill having a human machine interface (HMI) (3) for controlling the core drill (1) and the automatic feed device (2), wherein
a menu navigation (4) of the HMI (3) is automatically controllable in dependence on operating states of the core drill (1) and the automatic feed device (2) by the menu navigation of the HMI comprising menu pages and the menu pages being displayable in dependence on operating states of the core drill and the automatic feed device, wherein the system is set up to recognize and evaluate the operating states of the core drill (1) and the automatic feed device (2) and the menu pages are selected in dependence on operating states of the core drill (1) and the automatic feed device (2).

2. System according to Claim 1,
**characterized in that**
the system comprises a communication link (5) for communication between the core drill (1) and the automatic feed device (2).

3. System according to Claim 2,
**characterized in that**
the communication link (5) is formed wirelessly.

4. System according to one of the preceding claims
**characterized in that**
the operating states are formed by settings and/or sub-states of the core drill (1) and/or the automatic feed device (2).

5. Method for controlling a core drill (1) and an automatic feed device (2) with a human machine interface (HMI) (3), which is arranged on the power tool (1),
the method comprising the following steps:
a) providing a core drill (1) with an HMI (3),
b) providing an automatic feed device (2), a menu navigation (4) of the HMI (3) of the core drill (1) being set up in such a way that, at a time tOperation of the operation of the core drill (1) or the automatic feed device (2), only those menu pages of the menu navigation (4) that are required for the operation and/or a continuation of the operation of the core drill (1) or the automatic feed device (2) are displayed via the HMI (3), wherein the system is set up to recognize and evaluate the operating states of the core drill (1) and the automatic feed device (2) and the menu pages are selected in dependence on operating states of the core drill (1) and the automatic feed device (2).

6. Method according to Claim 5,
**characterized in that**
the core drill (1) and/or the automatic feed device (2) is set up to recognize and evaluate the operating states of the core drill (1) and/or the automatic feed device (2).

7. Use of a human machine interface (HMI) (3) for controlling a core drill (1) and an automatic feed device (2), wherein
the HMI (3) is arranged on the core drill (1) and comprises a menu navigation (4), the menu navigation (4) of the HMI (3) being automatically controllable in dependence on operating states of the core drill (1) and the automatic feed device (2) by the menu navigation (4) of the HMI comprising menu pages and the menu pages being displayable in dependence on operating states of the core drill (1) and the automatic feed device, wherein the system is set up to recognize and evaluate the operating states of the core drill (1) and the automatic feed device (2) and the menu pages are selected in dependence on operating states of the core drill (1) and the automatic feed device (2).

## Revendications

1. Système comprenant un appareil de carottage (1) et un dispositif d'avancement automatique (2), l'appareil de carottage présentant une interface homme-machine (HMI) (3) pour commander l'appareil de carottage (1) et le dispositif d'avancement automatique (2),
une navigation par menu (4) de l'IHM (3) pouvant être commandée automatiquement en fonction d'états de fonctionnement de l'appareil de carottage (1) et du dispositif d'avancement automatique (2), la navigation par menu de l'IHM comprenant des pages de menu et les pages de menu pouvant être affichées en fonction des états de fonctionnement de l'appareil de carottage et du dispositif d'avancement automatique, le système étant conçu pour reconnaître et évaluer les états de fonctionnement de l'appareil de carottage (1) et du dispositif d'avancement automatique (2), et une sélection des pages de menu étant effectuée en fonction des états de fonctionnement de l'appareil de carottage (1) et du dispositif d'avancement automatique (2).

2. Système selon la revendication 1,
**caractérisé en ce que**
le système comprend une liaison de communication (5) destinée aux communications entre l'appareil de carottage (1) et le dispositif d'avancement automatique (2).

3. Système selon la revendication 2,
**caractérisé en ce que**
la liaison de communication (5) est conçue sans fil.

4. Procédé selon l'une des revendications précédentes,
**caractérisé en ce que**
les états de fonctionnement sont établis par des réglages et/ou des sous-états de l'appareil de carottage (1) et/ou du dispositif d'avancement automatique (2).

5. Procédé de commande d'un appareil de carottage (1) et d'un dispositif d'avancement automatique (2) doté d'une interface homme-machine (IHM) (3) disposée sur la machine-outil (1),
le procédé comprenant les étapes suivantes consistant à :
a) fournir un appareil de carottage (1) doté d'une IHM (3) ;
b) fournir un dispositif d'avancement automatique (2), un guide par menu (4) de l'IHM (3) de l'appareil de carottage (1) étant conçu de telle sorte qu'à un instant tBetrieb du fonctionnement de l'appareil de carottage (1) ou du dispositif d'avancement automatique (2) via l'IHM (3), seules sont affichées les pages de menu du guide par menu (4) qui sont nécessaires au fonctionnement et/ou à la poursuite du fonctionnement de l'appareil de carottage (1) ou du dispositif d'avancement automatique (2), le système étant conçu pour reconnaître et évaluer les états de fonctionnement de l'appareil de carottage (1) et du dispositif d'avancement automatique (2), et une sélection des pages de menu étant effectuée en fonction des états de fonctionnement de l'appareil de carottage (1) et du dispositif d'avancement automatique (2).

6. Procédé selon la revendication 5,
**caractérisé en ce que**
l'appareil de carottage (1) et/ou le dispositif d'avancement automatique (2) est/sont conçu(s) pour reconnaître et évaluer les états de fonctionnement de l'appareil de carottage (1) et/ou du dispositif d'avancement automatique (2).

7. Utilisation d'une interface homme-machine (IHM) (3) pour commander un appareil de carottage (1) et un dispositif d'avancement automatique (2),
l'IHM (3) étant disposée sur l'appareil de carottage (1) et comprenant un guide par menu (4), le guide par menu (4) de l'IHM (3) pouvant être commandé automatiquement en fonction des états de fonctionnement de l'appareil de carottage (1) et du dispositif d'avancement automatique (2), la navigation par menus (4) de l'IHM comprenant des pages de menu, et les pages de menu pouvant être affichées en fonction des états de fonctionnement de l'appareil de carottage (1) et du dispositif d'avancement automatique, le système étant conçu pour reconnaître et évaluer les états de fonctionnement de l'appareil de carottage (1) et du dispositif d'avancement automatique (2), et une sélection des pages de menu étant effectuée en fonction des états de fonctionnement de l'appareil de carottage (1) et du dispositif d'avancement automatique (2).
